# EUROPEAN PATENT SPECIFICATION

(11) **EP 1 295 053 B1**
(45) Date of publication and mention of the grant of the patent: **06.10.2004**
(21) Application number: 01918180.9
(22) Date of filing: 15.02.2001
(51) Int. Cl.: F16H 59/02

(54) **GEARSHIFT ASSEMBLY**
SCHALTVORRICHTUNG
ENSEMBLE LEVIER DE VITESSES

(30) Priority: 27.06.2000 US 604362
(43) Date of publication of application: 26.03.2003
(73) Proprietor: KEY SAFETY SYSTEMS, INC., Sterling Heights, Michigan 48314 (US)
(72) Inventor: SHOVLIN, William, D., Grosse Pointe, MI48230 (US)
(74) Representative: Gislon, Gabriele
(86) International application number: PCT/US2001/005000
(87) International publication number: WO 2002/001093

(56) References cited:
- EP-A- 0 772 112
- EP-A- 1 004 800
- US-A- 5 285 034
- US-A- 5 588 329

## Description

The present invention relates to a gearshift assembly for motor vehicles, as described in the preamble of claim 1.

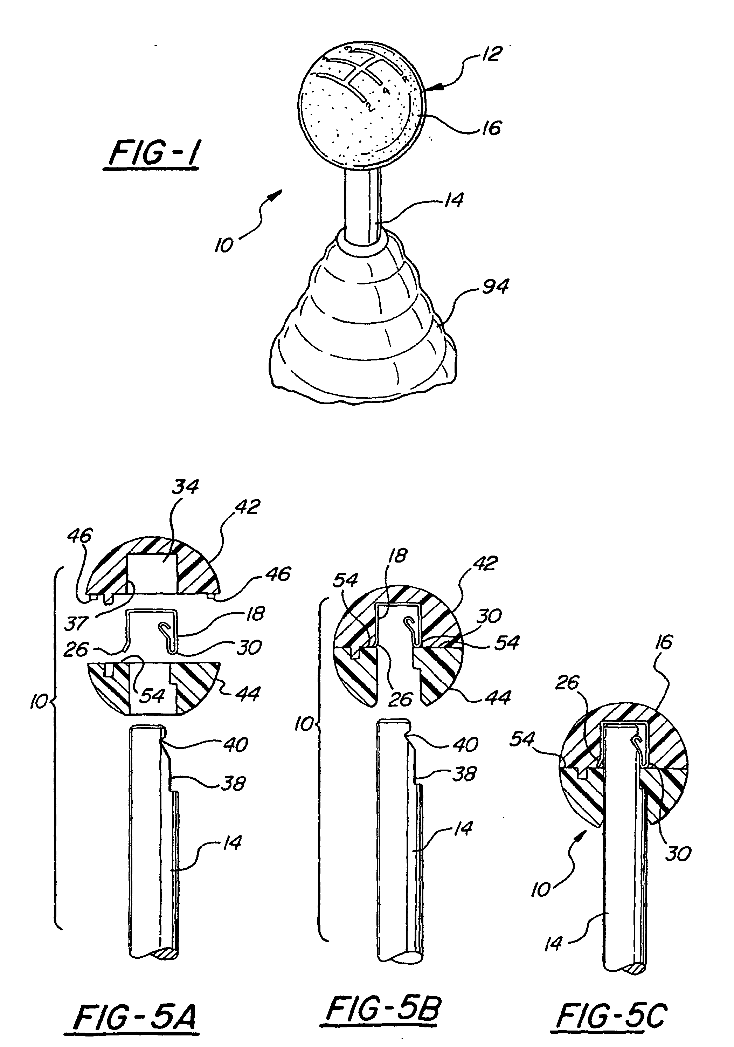

It is necessary to keep a gearshift knob secured to a shaft so that the gearshift knob does not slide off the shaft and to prevent the gearshift knob from rotating on the shaft. Rotation is undesirable because the gearshift knob may have a shape that is non-symmetrical, making a specific orientation preferred. As an example, the shift pattern of the gears is generally displayed on the gearshift knob, making consistent orientation of the gearshift knob necessary.
The European Patent N° 1004800 discloses a shifter for automotive vehicle comprising a shift lever, a shifter knob and a connector cap having a first snap-on. Said connector cap is moulded on said shift lever for receiving and retaining said knob. An axially extending groove is provided on the upper end of the connector cap. In order to prevent the rotation of the shifter knob, a retainer sleeve is disposed over said connector cap. From the top of said retainer sleeve an axially arranged tongue is projecting downward which mechanically engages the groove in the connector cap. There are foreseen also cross flanges on the exterior surface of the sleeve top for further preventing the rotation of the shifter knob.
The US Patent N° 5,588,329, which comprises the features mentioned in the preamble of claims 1, discloses a shift knob mounted onto a lever shaft (see Figures 1-5) in a way to prevent the rotation of the knob. An engagement hole extends horizontally at the lower end of the knob, which is shaped to receive the first fastening clicks (flanges) of the support body and allowing thereby to fix the knob on said support body. The lever shaft has a circumferential groove for accommodating the second fastening clicks (flanges) of the support body. A rotation-preventing projection is formed on a side of said lever shaft which interacts with a correspondingly shaped groove on said support body.
The European Patent Application N° 0772112 relates to a device for fixing gearshift knob to gearshift shaft comprising a cylindrical core with an axial orifice through which the from end of a lever arm can be slided. The lever arm comprises at its front end an axial groove dimensioned to house with the positioning projection of the closed end of the core. The core has also securing projections which become housed in the coaxial securing groove of the lever arm by elastic reaction of two radial tightening extensions linked externally to a circular ring of the core.
The US Patent N° 5,285,034 discloses a gearshift lever comprising a knob and an elongated lever part. The knob is maintained axially by means of snapping organs of the bushing mounted on the lever part and they cooperate with the inwardly protruding hooks of the knob.
In order to prevent the freely turning of the knob around the lever, a recess is provided in the bushing which interacts with the protrusion formed on the internal surface of the knob. The knob has a cavity into which the lever part protrudes and wherein an electrical switch is housed.. Different electrical functions can be switched in dependence on the moving direction of the knob.

Gearshift knobs are often attached to a shaft by a friction fit. Such gearshift knobs have a cavity with a profile that is slightly smaller than the shaft, such that when the shaft is forced into the gearshift knob, the gearshift knob will be held to the shaft by friction. In another type of gearshift assembly the knob has a cavity with a flat side, and the shaft has a corresponding flat side. A clip has a concave profile and slides into the cavity to rest against the flat side. When the shaft is inserted in the cavity, the clip is compressed between the flat side of the cavity and the flat side of the shaft. The clip is compressed and exerts force against both flat sides that holds the gearshift knob onto the shaft.

There are many other examples of gearshift knobs that are held onto shafts by friction. These gearshift knobs are removable; however, repeated removal and re-assembly of these types of gearshift knobs can weaken the hold that the gearshift knob exerts onto the shaft. The fit of the gearshift knob may deteriorate making it possible that the gearshift knob will come off the shaft or at least rattle.

Gearshift knobs have been developed to fit onto shafts with a more substantial attachment; however, these gearshift knobs typically are not easily mounted to or removed from the shaft. Gearshift knobs of this type require multiple components, and must be assembled and disassembled for mounting or dismounting.

The gearshift assembly of the present invention includes a gearshift knob that can be pre-assembled, so at the time of installation to the vehicle the gearshift knob is secured to the shaft without the use of any tools. The gearshift knob can also be removed from the shaft without the use of any special tools.

### Brief Description of the Drawings

Fig. 1 is a perspective view of a gearshift assembly of the present invention.
Fig. 2 is a perspective view of a fastener used in the present invention.
Figs. 3A through 3D are section views of the fastener and the gearshift shaft of the present invention as the gearshift shaft engages the fastener.
Fig. 4 is an exploded perspective view of a gearshift knob of the present invention.
Fig. 5A is an exploded side sectional view of a gearshift assembly of the present invention.
Fig. 5B is a partially exploded side sectional view of a gearshift assembly of the present invention.
Fig. 5C is a side sectional view of a gearshift assembly of the present invention.
Fig. 6 is a side sectional view of a gearshift assembly of the present invention.
Fig. 6A is an enlarged detail view of the portion of the assembly circle in Fig. 6.
Fig. 7 is a perspective view of an alternative embodiment of a gearshift assembly of the present invention.
Fig. 8 is a side sectional view of the alternative embodiment of a gearshift assembly of the present invention.
Fig. 9 is an exploded perspective view of the alternative embodiment of a gearshift assembly of the present invention.

### Detailed Description of the Invention

Referring to Fig. 1, a gearshift assembly 10 includes a gearshift knob 12 mounted to a shaft 14. The gearshift knob has a body 16. A fastener 18, shown in Fig. 2, is mounted with the body for securing the gearshift knob to the shaft. The shaft is adapted to interact with the fastener to removably secure the gearshift knob to the shaft.

Referring to Fig. 2, the fastener 18 is generally U-shaped. The fastener has a top 20 which is generally square shaped with two legs 22, 24 extending at approximately right angles to the top 20 of the fastener. The legs are the same width as the top of the fastener. A first leg 22 includes an angled end portion 26 angled outward. The angled end portion 26 of the first leg 22 helps to keep the fastener 18 secure when the shaft 14 is inserted into the knob. A second leg 24 includes a resilient inner flange 28 extending inward from a distal end 30 of the second leg. The resilient inner flange 28 also includes an angled end portion 31 that angles inward. The angled end portion 31 of the inner flange 28 wraps back around to form a rounded distal tip 33. The fastener 18 also has a cutout 32 within the top 20 of the fastener adjacent the first leg 22.

As used herein and in the claims the terms "inward" and with regards to the legs of the fastener is understood to indicate a direction going towards the exterior of the gearshift knob when the faster is located inside of the knob, and "outward" is understood to indicate a direction going towards the interior of the gearshift knob when the faster is located inside of the knob.

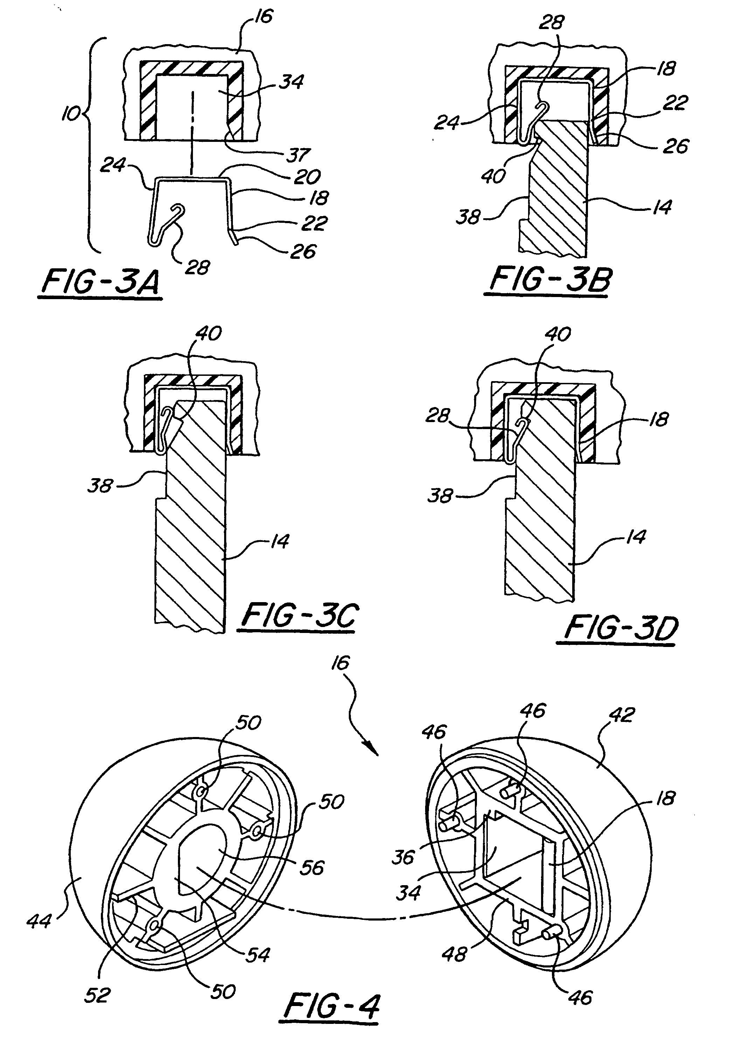

Referring to Fig. 3A, the two legs 22, 24 of the fastener 18 are preferably angled slightly outward from the top 20 of the fastener such that the angle of incidence between the first and second legs is slightly more than ninety degrees from the top 20 of the fastener. The body 16 of the gearshift knob 10 has a pocket 34 for receiving the fastener 18. The pocket 34 is sized to accept the top 20 of the fastener. As can be seen in Fig. 4, the pocket 34 has a protrusion 36 that is received into the cutout 32 within the top 20 of the fastener. The cutout 32 and the protrusion 36, insure that the fastener 18 is inserted within the pocket 34 in the correct orientation. When the fastener 18 is inserted within the pocket 34, the first and second legs 22, 24 are squeezed within the pocket. The first and second legs push outward against the inner walls of the pocket 34 to secure the fastener 18 tightly within the pocket. The outer wall of the pocket 34 adjacent the first leg 22 has an angled surface 37 for contacting the outwardly angled end portion 26 of the first leg.

When the shaft 14 is inserted between the first and second legs 22, 24 of the fastener 18, the shaft contacts the inside surface of the first leg 22 which acts to force the shaft horizontally into engagement with the resilient inner flange 28 of the second leg 24. Further, the angled end portion 26 acts to prevent the fastener 18 from moving away from the shaft 14. In the preferred embodiment, the pocket 34 has a back wall such that the fastener 18 can not move in that direction as the shaft 14 is inserted. However, it is to be understood that other embodiments of the present invention may include pockets that do not include a back wall to prevent the fastener 18 from moving when the shaft 14 is inserted. In this instance, when the shaft is inserted, the first leg 22 and the second leg 24 are forced against the inner walls of the pocket 34. The angled end portion 26 of the first leg 22 contacts the angled surface 37 of the pocket 34, thereby preventing the fastener 18 from moving out of the pocket.

The shaft 14 has a flat surface 38 on a side thereof. The profile of the flat surface includes a notch 40 for receiving the resilient inner flange 28 of the fastener 18. Referring to Figs. 3B and 3C, as the shaft 14 is inserted within the fastener 18, the resilient inner flange 28 is flexed outward toward the second leg 24 of the fastener 18. Referring to Fig. 3D, once the shaft 14 is inserted fully within the fastener 18, the resilient inner flange 28 will expand inward to be received within the notch 40 on the flat surface 38 of the shaft 14. Once the resilient inner flange 28 is received within the notch 40 the gearshift knob 12 is held securely to the shaft. The knob is prevented from sliding off the shaft by the interaction of the notch 40 with the resilient inner flange 28. The gearshift knob 12 is held on to the shaft with enough force to withstand inadvertent removal during normal use of the gearshift assembly.

Referring to Fig. 4, the body 16 has a first half 42 and a second half 44. In the preferred embodiment, the body 16 is spherical and is divided through the center. The first half 42 includes the pocket 34 for receiving the fastener 18. The first half 42 also includes a plurality of guide pins 46 extending from an inner face 48 of the first half 42. The second half 44 has apertures 50 within an inner face 52 for receiving the guide pins 46 of the first half 42. The second half 44 also has a support surface 54 for holding the fastener 18 securely within the pocket 34 when the first half 42 is assembled to the second half. The second half 44 further has an opening 56 extending through the second half for receiving the shaft 14.

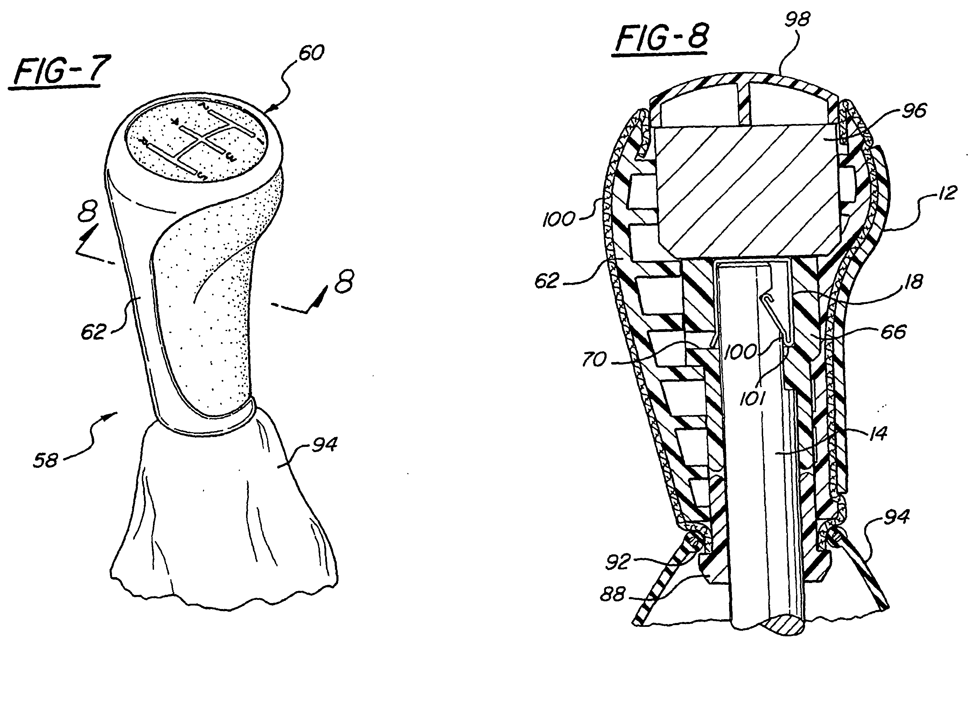

Referring to Figs. 5A through 5C, the fastener 18 is inserted within the pocket 34 of the first half 42 of the body 16, and the second half 44 of the body 16 is assembled to the first half 42. The tapered distal end 26 of the first leg 22 extends outward from the fastener 18 and rests upon the support surface 54. The distal end 30 of the second leg 24 also rests on the support surface 54 of the second half 44. The distal ends 26, 30 of the first and second legs 22, 24 of the fastener 18 are held tightly within the pocket 34 within the body 16 by the support surface 54 of the second half 44 of the body 16. The opening 56 within the second half 44 is sized to accept the shaft 14 such that the shaft 14 can be inserted therein to engage the fastener 18 and thereby secure the gearshift knob body to the shaft.

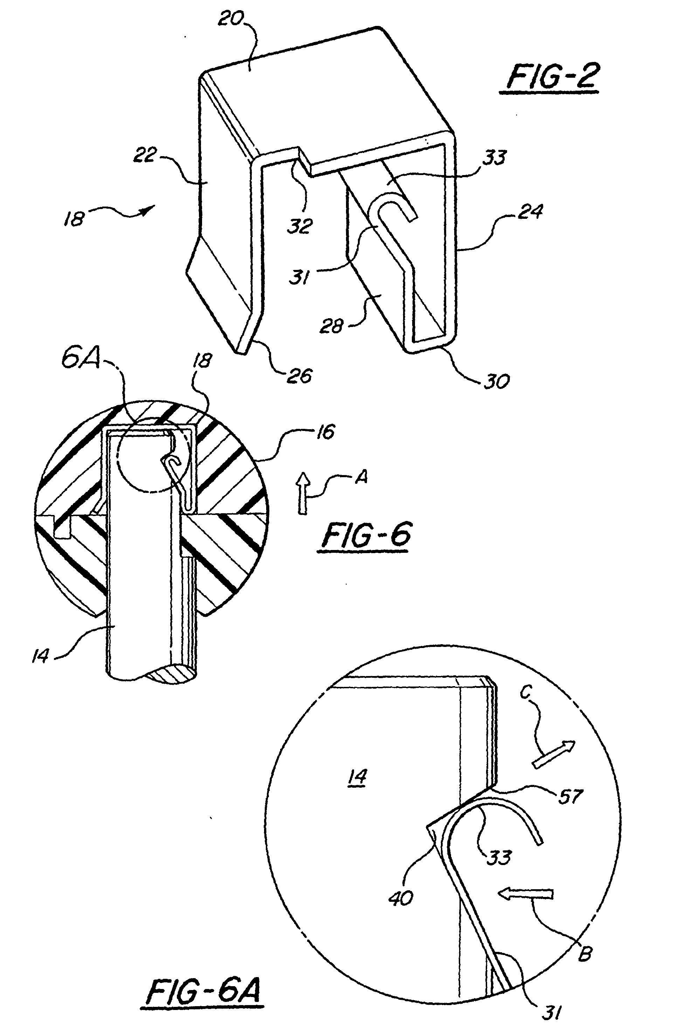

The resilient inner flange 28 can be flexed outward to allow removal of the gearshift knob 12 under a sufficiently high force, such that would not be experienced under normal use conditions. In this way, the gearshift knob 12 can be removed when repairs need to be made to the gearshift assembly 10. Referring to Fig. 6, to remove the gearshift knob 12 from the shaft 14, the gearshift knob 12 must be pulled in the direction indicated by arrow A. The rounded distal tip 33 of the resilient inner flange 28 is received within the notch 40 when the gearshift knob is in place on the shaft. The notch has an upper angled surface 57. The resilient inner flange 28 of the fastener 18 is in a slightly compressed state thereby causing the resilient inner flange 28 to exert a force in the direction shown by arrow B. This force acts to maintain the rounded distal tip 33 of the resilient inner flange 28 within the notch 40.

When an attempt is made to move the gearshift knob 12 in the direction indicated by arrow A, the rounded distal tip 33 of the resilient inner flange 28 contacts the upper angled surface 57 of the notch 40 and prevents further movement. However, the angled surface 57 provides a ramp that will assist the rounded distal tip 33 in moving out of the notch. Therefore, if sufficient force is exerted, to overcome the resilient force of the inner flange 28, the rounded distal tip 33 of the resilient inner flange 28 will move upward along the upper angled surface 57 of the notch 40 in a direction indicated by arrow C. There is additional resistance due to friction between the upper angled surface 57 and the rounded distal tip 33. However, if the force exerted upon the gearshift knob is sufficient, the resilient inner flange 28 will flex away from the shaft 14, until the rounded distal end 33 moves beyond the upper angled surface 57 and out of the notch 40, allowing the gearshift knob to be removed from the shaft.

Furthermore, the gearshift knob 12 is secured rotationally by the interaction of the resilient inner flange 28 with the flat surface 38 of the shaft 14. The resilient inner flange 28 has a width that is equal to the width of the top 20 of the fastener 18. The resilient inner flange 28 rests against the flat surface 38 of the shaft 14 to prevent any radial rotation of the gearshift knob once the shaft has fully engaged the fastener within the gearshift knob.

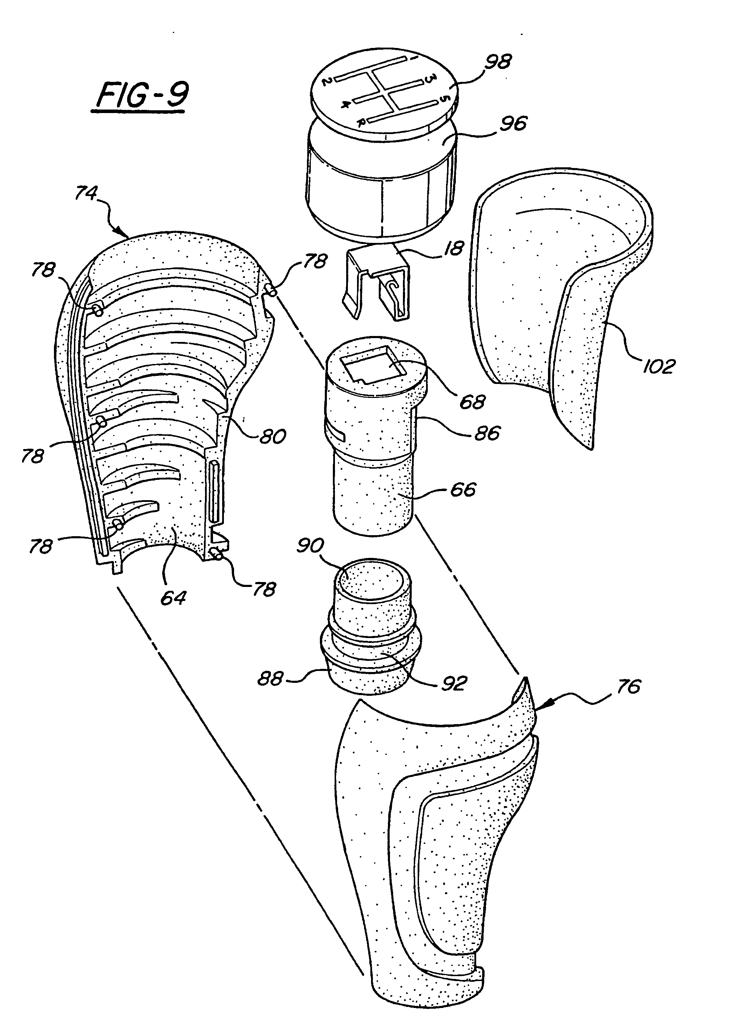

Referring to Fig. 7, an alternative embodiment 58 of the gearshift assembly is shown. The alternative gearshift assembly 58 includes a gearshift knob 60 mounted to the shaft 14. The gearshift knob has a body 62. The fastener 18 is mounted within the body for securing the gearshift knob 60 to the shaft. The shaft is adapted to interact with the fastener to removably secure the gearshift knob to the shaft.

Referring to Figs. 8 and 9, the alternative gearshift knob 60 has a body 62 that has an opening 64 extending therethrough. The fastener 18 is mounted within a cartridge 66, and the cartridge is mounted within the opening. The cartridge 66 has a pocket 68 for receiving the fastener 18. At the bottom of the pocket 68 the cartridge has a support surface 70 which supports the fastener 18 within the cartridge 66. An end 100 of the fastener rests on a surface 101. When the fastener 18 is inserted within the pocket 34, the distal ends of the first leg 22 and the second leg 24 contact, and are supported by, the support surface 70 within the cartridge. The cartridge 66 includes an aperture 72 extending from the bottom of the cartridge for receiving the shaft 14.

The body 62 of the alternative embodiment 58 has a first half 74 and a second half 76. The first half has a plurality of guide pins 78 extending from an inner face 80 of the first half. The second half 76 includes apertures 82 in an inner face 84 for receiving the guide pins 78 of the first half 74. The first half 74 and second half 76 of the body 62 are generally concave in shape such that when the first half and the second half are assembled, the opening 64 through the body 62 is defined. The profile of the inner walls of the first half 74 and second half 76 of the body 62 are such that the cartridge 66 fits snuggly within the opening 64 through the body. The cartridge has a flat side 86 that corresponds to the profile within the opening 64 to insure that the cartridge is inserted in the proper orientation.

A boot adapter 88 is mounted within the opening 64 directly below the cartridge 66. The boot adapter has a center opening 90 to allow the shaft 14 to be inserted through the boot adapter 88 when the gearshift knob 60 is assembled to the shaft 14. The boot adapter 88 has a channel 92 about the circumference of the boot adapter at a lower distal end of the boot adapter. The channel 92 allows a decorative boot 94 to be attached to the lower portion of the gearshift knob 60 to provide a pleasing appearance to the assembly.

Once the cartridge 66 is placed within the opening 64 of the body 62, a weight 96 is placed within the opening 64 directly above the cartridge 66. The weight 96 is placed within the body 62 to balance and provide stability to the gearshift knob 60. A decorative cover 98 is placed over the weight. The decorative cover preferably includes markings to indicate the shift pattern of the gears. The body 62 preferably has an outer covering 100 of leather or other suitable material and a front faceplate 102 to provide an appealing appearance.

## Claims

1. A gearshift assembly (10) comprising a gearshift knob (12) having a body (16) and being mounted on a gearshift shaft (14), and a fastener (18) enclosed within a pocket (34) of said body; wherein said fastener includes a resilient inner flange (28) received within a notch (40) on said gearshift shaft (14), **characterised in that** said inner flange (28) includes an inwardly aneled end nortion (31) received within said notch (40) of said gearshift shaft (14) to removably secure said gearshift knob (12) to said gearshift shaft (14) such that said gearshift knob (12) is removable by simply pulling on said gearshift knob (12), while the inner flange (28) interacts with a flat surface (38) of the shaft (14) to secure rotationally the gearshift knob (12).

2. A gearshift assembly (10) according to claim 1, **characterised in that** said fastener (18) has an outwardly angled end portion (26) which contacts an angled surface (37) of the pocket (34).

3. The gearshift assembly (10) of claim 2 wherein said fastener (18) includes a top portion (20) with a first leg (22) and a second leg (24) extending therefrom at angles forming a generally U-shaped configuration for engaging said gearshift shaft (14).

4. The gearshift assembly (10) of any of claims 1 through 3 wherein said body (16) defines a generally hollow structure with an opening (64) extending therethrough.

5. The gearshift assembly (10) of claim 1 wherein said fastener (18) is secured within a cartridge (66), said cartridge being secured within said body (16).

6. The gearshift assembly (10) of claim 5 further including a boot adapter (88) inserted within said opening below said cartridge (66), a weight (96) inserted within said opening above said cartridge, and a decorative cap (98) mounted to said gearshift knob (12) above said weight.

7. The gearshift assembly (10) of claim 1 wherein said body (16) comprises a first half (42), and a second half (44) joined to said first half.

8. The gearshift assembly (10) of claim 7 wherein said first half (42) includes guide pins (46) extending therefrom, and said second half (44) includes apertures (50) for receiving said guide pins when said first half is joined to said second half.

## Patentansprüche

1. Schaltvorrichtung (10), die aufweist: einen Schaltknopf (12), der einen Körper (16) aufweist und auf einer Schaltwelle (14) montiert ist; und ein Befestigungselement (18), das innerhalb eines Hohlraumes (34) des Körpers eingeschlossen ist, wobei das Befestigungselement einen elastischen Innenflansch (28) umfaßt, der innerhalb einer Kerbe (40) auf der Schaltwelle (14) aufgenommen wird, **dadurch gekennzeichnet, daß** der Innenflansch (28) einen nach innen winkeligen Endabschnitt (31) umfaßt, der innerhalb der Kerbe (40) der Schaltwelle (14) aufgenommen wird, um den Schaltknopf (12) entfernbar an der Schaltwelle (14) zu sichern, so daß der Schaltknopf (12) durch einfaches Ziehen am Schaltknopf (12) entfernt werden kann, während der Innenflansch (28) mit einer ebenen Fläche (38) der Welle (14) in Wechselwirkung ist, um rotationsmäßig den Schaltknopf (12) zu sichern.

2. Schaltvorrichtung (10) nach Anspruch 1, **dadurch gekennzeichnet, daß** das Befestigungselement (18) einen nach außen winkeligen Endabschnitt (26) aufweist, der eine winkelige Fläche (37) des Hohlraumes (34) berührt.

3. Schaltvorrichtung (10) nach Anspruch 2, bei der das Befestigungselement (18) einen oberen Abschnitt (20) mit einem ersten Schenkel (22) und einem zweiten Schenkel (24) umfaßt, die sich von dort unter Winkeln erstrecken, die eine im allgemeinen U-förmige Konfiguration für einen Eingriff mit der Schaltwelle (14) bilden.

4. Schaltvorrichtung (10) nach einem der Ansprüche 1 bis 3, bei der der Körper (16) eine im allgemeinen hohle Konstruktion mit einer sich dort hindurch erstreckenden Öffnung (64) definiert.

5. Schaltvorrichtung (10) nach Anspruch 1, bei der das Befestigungselement (18) innerhalb einer Hülse (66) gesichert ist, wobei die Hülse innerhalb des Körpers (16) gesichert ist.

6. Schaltvorrichtung (10) nach Anspruch 5, die außerdem ein Schutzkappenzwischenstück (88), das in die Öffnung unterhalb der Hülse (66) eingesetzt wird, ein Gewicht (96), das in die Öffnung über der Hülse eingesetzt wird, und eine Zierkappe (98) umfaßt, die auf dem Schaltknopf (12) über dem Gewicht montiert ist.

7. Schaltvorrichtung (10) nach Anspruch 1, bei der der Körper (16) eine erste Hälfte (42) und eine zweite Hälfte (44) aufweist, die mit der ersten Hälfte verbunden ist.

8. Schaltvorrichtung (10) nach Anspruch 7, bei der die erste Hälfte (42) sich daraus erstreckende Führungsstifte (46) und die zweite Hälfte (44) Öffnungen (50) für das Aufnehmen der Führungsstifte umfaßt, wenn die erste Hälfte mit der zweiten Hälfte verbunden wird.

## Revendications

1. Ensemble de changement de vitesses (10) comprenant un pommeau de changement de vitesses (12) comportant un corps (16) et étant monté sur un axe de changement de vitesses (14), et un élément de fixation (18) enfermé dans une cavité (34) dudit corps; dans lequel ledit élément de fixation comprend une patte intérieure élastique (28) reçue dans une encoche (40) sur ledit axe de changement de vitesses (14), **caractérisé en ce que** ladite patte intérieure (28) comprend une partie d'extrémité inclinée vers l'intérieur (31) reçue dans ladite encoche (40) dudit axe de changement de vitesses (14) pour fixer de manière amovible ledit pommeau de changement de vitesses (12) audit axe de changement de vitesses (14) de sorte que ledit pommeau de changement de vitesses (12) est amovible par simple traction sur ledit pommeau de changement de vitesses (12), pendant que la patte intérieure (28) interagit avec une surface plane (38) de l'axe (14) pour fixer le pommeau de changement de vitesses (12) en rotation.

2. Ensemble de changement de vitesses (10) selon la revendication 1, **caractérisé en ce que** ledit élément de fixation (18) comporte une partie d'extrémité inclinée vers l'extérieur (26) qui est en contact avec la surface inclinée (37) de la cavité (34).

3. Ensemble de changement de vitesses (10) selon la revendication 2, dans lequel ledit élément de fixation (18) comprend une partie de butée (20) dotée d'une première jambe (22) et d'une seconde jambe (24) s'étendant depuis celle-ci à des angles formant une configuration globalement en forme de U pour engager ledit axe de changement de vitesses (14).

4. Ensemble de changement de vitesses (10) selon l'une quelconque des revendications 1 à 3, dans lequel ledit corps (16) définit une structure globalement creuse que traverse une ouverture (64).

5. Ensemble de changement de vitesses (10) selon la revendication 1, dans lequel ledit élément de fixation (18) est fixé dans une cartouche (66), ladite cartouche étant fixée dans ledit corps (16).

6. Ensemble de changement de vitesses (10) selon la revendication 5, comprenant en outre un adaptateur de fourreau protecteur (88) inséré dans ladite ouverture au-dessous de ladite cartouche (66), une masse (96) insérée dans ladite ouverture au-dessus de ladite cartouche et un capuchon décoratif (98) monté sur ledit pommeau de changement de vitesses (12) au-dessus de ladite masse.

7. Ensemble de changement de vitesses (10) selon la revendication 1, dans lequel ledit corps (16) comprend une première moitié (42) et une seconde moitié (44) accouplée à ladite première moitié.

8. Ensemble de changement de vitesses (10) selon la revendication 7, dans lequel ladite première moitié (42) comprend des ergots de guidage (46) s'étendant depuis celle-ci, et ladite seconde moitié (44) comprend des ouvertures (50) pour recevoir lesdits ergots de guidage lorsque ladite première moitié est accouplée à ladite seconde moitié.
